# EUROPÄISCHE PATENTANMELDUNG

(11) **EP 1 028 282 A2**
(43) Veröffentlichungstag der Anmeldung: **16.08.2000**
(21) Anmeldenummer: 00102509.7
(22) Anmeldetag: 05.02.2000
(51) Int. Cl.: F16L 25/00

(54) **Anschlussverbindung und Anschlusselement für ringgewellte Schläuche**

(30) Priorität: 12.02.1999 DE 19905809
(71) Anmelder: Witzenmann GmbH Metallschlauch-Fabrik Pforzheim, D-75175 Pforzheim (DE)
(72) Erfinder: Seeger, Bernd, 75181 Pforzheim (DE)
(74) Vertreter: Blumenröhr, Dietrich

(57) **Zusammenfassung**

Es wird eine Anschlußverbindung bzw. ein Anschlußelement für ringgewellte Metallschläuche vorgeschlagen, welches mit Hilfe eines Halteelementes zur Festlegung des Schlauches mittels Steckmontage geeignet ist, wozu das Halteelement elastische nachgiebige Rastvorsprünge aufweist.

## Beschreibung

Die Erfindung betrifft eine Anschlußverbindung zur fluid- und gasdichten, druckfesten und löt- bzw. schweißlosen Anbindung ringgewellter Metallschläuche an ein in einem endständigen Bereich des Schlauches angeordnetes Anschlußelement, wobei der Schlauch und/oder das Anschlußelement ein Dichtelement trägt.

Derartige löt- bzw. schweißlose Anschlußverbindungen werden meist in Bereichen der Haustechnik für Gas- oder Wasserleitungen verwendet und weisen beispielsweise ein Befestigungselement auf, das auch einstückig mit dem Anschlußelement verbunden sein kann und auf den Schlauch und über den dort angeordneten Dichtring geschoben wird. Über endständige Haltezungen des Befestigungselementes, die nach dem Aufstecken nach innen biegbar sind und hierdurch in eine Wellung des Schlauches eingreifen, wird die Anschlußverbindung dauerhaft hergestellt. Hierbei besteht jedoch ein Problem darin, daß dieses Umbiegen der Haltezungen nur mit Hilfe spezieller Werkzeuge, also Zangen erfolgen kann, die - insbesondere auf Baustellen - nicht immer verfügbar sind. Außerdem ist während des manuellen Umbiegens der Haltezungen nicht immer sichergestellt, daß diese in gleich starkem Maße umgebogen werden und hierbei genau und vollständig in ein Wellental eintauchen, der Schlauch also tatsächlich dauerhaft formschlüssig gehalten wird. Hierdurch sind diese Anschlußverbindungen nur in beschränktem Maße für die Praxis tauglich.

Desweiteren sind im Stand der Technik schraubbare Anschlußverbindungen bekannt, bei denen das über den Schlauch und den Dichtring geschobene Anschlußelement ein Innengewinde aufweist, das mit einem Außengewinde eines Formelementes zusammenwirkt, welches in der Regel geteilt ausgeführt ist, um trotz der den Formschluß herstellenden radial nach innen in die Wellentäler eingreifenden Bereiche eine problemlose Montage dieses Befestigungselementes zu ermöglichen. Auch existieren im Stand der Technik eine Vielzahl von Abwandlungen dieser geschraubten Anschlußverbindungen, wobei z. B. ein mit einem Außengewinde versehenes Anschlußelement von einer Überwurfmutter beaufschlagt wird, die mit einem wiederum den Schlauch formschlüssig umgreifenden (geteilten) Befestigungselement zusammenwirkt. Diesen unterschiedlichen Bauformen ist jedoch neben der aufwendigeren Montage auch die ebenso unbefriedigende Dichtwirkung gemeinsam, da der Dichtring in der Regel am Schlauchende angeordnet und gegen das Anschlußelement gedrückt wird, was bei der Schraubmontage aufgrund des undefinierten Abstandes zwischen Schlauchende und vom Befestigungselement beaufschlagten Wellungen leicht zu problematisch großen Anpresskräften und hierdurch bereits bei der Montage zu einer Zerstörung des Dichtelementes führen kann.

Hiervon ausgehend liegt der vorliegenden Erfindung die Aufgabe zugrunde, eine Anschlußverbindung der eingangs genannten Art zur Verfügung zu stellen, die sich durch eine verbesserte Handhabbarkeit und insbesondere eine vereinfachte Montage auszeichnet.

Diese Aufgabe wird bei der Anschlußverbindung gemäß dem Oberbegriff von Anspruch 1 erfindungsgemäß dadurch gelöst, daß die Anschlußverbindung steckbar ausgeführt ist, daß - insbesondere in einem Bereich radialer Überlappung - zwischen Metallschlauch und Anschlußelement ein insbesondere ringförmiges Halteelement angeordnet ist, daß das Halteelement mit radial vorstehenden elastisch nachgiebigen Rastvorsprüngen versehen ist, mittels derer der Durchmesser des Halteelementes veränderbar ist zwischen einer das Ineinanderstecken von Schlauch und Anschlußelement ermöglichenden eingezogenen Montageposition und einer nach der Montage einen Formschluß mit dem Schlauch und/oder dem Anschlußelement aufgrund der Elastizität selbsttätig herstellenden vorstehenden Rastposition.

Hierdurch ergibt sich der wesentliche Vorteil, daß derartige Anschlußverbindungen sehr gut für den Einsatz auf Baustellen geeignet sind, da sie in der Regel ganz ohne Werkzeug und in immer gleichbleibender Qualität hergestellt werden können, indem einfach der Schlauch und das Anschlußelement von Hand ineinandergesteckt werden und zwar so weit, bis sich beide Teile ausreichend weit überlappen, wobei dann das eingerastete Halteelement für den automatischen gegenseitigen Formschluß von Schlauch und Anschlußelement sorgt. Der Formschluß ist so stabil, daß die Anschlußverbindungen selbst Drücke von bis zu 50 bar zerstörungsfrei und ohne Beeinträchtigung der Dichtwirkung aufnehmen kann. Gleichzeitig ergibt sich die unbeeinträchtigte Dichtwirkung dieser Anschlußverbindung dadurch, daß durch die werkzeuglose Montierbarkeit per Hand übergroße Anpresskräfte quasi automatisch ausgeschlossen sind.

Die lediglich formschlüssige Verbindung der ineinandergesteckten Teile führt darüber hinaus zu einem weiteren Vorteil, nämlich daß der Schlauch gegenüber dem Anschlußelement trotz der hochdichten Verbindung drehbar bleibt, so daß beispielsweise etwaige auf den Schlauch ausgeübte Torsionskräfte problemlos abgefangen werden können und wodurch auch die Montage des Schlauches vereinfacht wird. Bei Schraub- oder Quetschverbindungen würde durch ein Verdrehen des Schlauches gegenüber dem Anschlußelement - soweit überhaupt möglich - die Verbindung teilweise gelöst und somit wäre die Funktionssicherheit und Dichtigkeit dieser Verbindung nicht mehr gewährleistet. Entsprechendes gilt natürlich auch für geschweißte Verbindungen, bei denen ein Verdrehen überhaupt nicht mehr möglich ist und etwaige Trosionskräfte bei entsprechender Überhöhung zu einer Beschädigung des Schlauches führen können.

Derartige geschweißte Verbindungen zeichnen sich darüber hinaus dadurch aus, daß dort nur bestimmte Werkstoffe verwendet werden können; bei der erfindungsgemäßen Steckverbindung besteht eine solche Anforderung nicht, denn hier können sogar nicht- bzw. nur schwer schweißbare Stoffe verarbeitet werden, wie beispielsweise Aluminium oder sogar Kunststoffe. Alleine entscheidend für die Funktionsfähigkeit der Anschlußverbindungen ist lediglich das Halteelement, das durch die Rastvorsprünge bzw. durch eigene Elastizität sicherstellt, daß die Steckmontage nicht behindert, jedoch die anschließende Fixierung durch selbsttätiges Verspreizen von Schlauch und Anschlußelement hergestellt wird.

Dadurch daß auch nur das erwähnte Halteelement für die gegenseitige formschlüssige Festlegung von Schlauch und Anschlußelement verantwortlich ist und diese Festlegung aus einer Schnappverbindung besteht, kann die an sich auf Dauer ausgelegte widerhakenähnliche Fixierung in einfacher Weise dadurch aufgehoben werden, daß zwischen Anschlußelement und Schlauch eine die Rastvorsprünge beaufschlagende Lösevorrichtung eingesteckt wird, die den Formschluß und somit die Wirkverbindung des Halteelementes mit dem Schlauch bzw. dem Anschlußelement aufhebt. Anschließend kann der Schlauch problemlos aus dem Anschlußelement herausgezogen werden. Eine derartige Lösevorrichtung kann beispielsweise durch eine auf den Schlauch aufzusteckende bzw. bereits aufgesteckte Hülse zur Verfügung gestellt werden, deren Durchmesser nur geringfügig größer als der Außendurchmesser des Schlauches ist und somit die Rastvorsprünge ungefähr in demjenigen Bereich beaufschlagt, der auch beim Einstecken des Schlauches von den Wellenbergen beaufschlagt wird.

Durch eine solche Lösevorrichtung ist es möglich, die ineinandergesteckte Anschlußverbindung zerstörungsfrei aufzuheben und die verwendeten Teile und insbesondere das Halteelement für eine erneute Anschlußverbindung wiederzuverwenden, ohne daß hierbei die Dichtigkeit bzw. die Belastbarkeit der Anschlußverbindung beeinträchtigt wird.

Zwar können Anschlußelement, Schlauch und Halteelement mit Rastvorsprüngen in fast beliebiger Art und Weise zusammenwirken bzw. ineinandergesteckt werden, besonders vorteilhaft ist es jedoch, wenn das Halteelement formschlüssig in einer entsprechenden Aussparung des Anschlußelementes bereits vor der Montage festgelegt ist, die Rastvorsprünge den einzusteckenden Schlauch beaufschlagen und in der Rastposition formschlüssig in zumindest eine Wellung eingreifen. Zweckmäßigerweise ist hierbei das Halteelement auf der Innenseite des Anschlußelementes angeordnet, so daß die Rastvorsprünge die Außenseite des in das Anschlußelement eingesteckten Schlauches beaufschlagen und in der Rastposition in zumindest ein Wellental eingreifen. Durch das Aufstecken des Anschlußelementes auf bzw. über den Schlauch läßt sich - im Gegensatz zu einem in den Schlauch eingesteckten Anschlußelement - in vorteilhafter Weise erreichen, daß der Strömungsquerschnitt des Schlauches unabhängig von der Gestalt der Anschlußverbindung bleiben kann, wobei auch das Halteelement gegenüber dem Strömungsmedium durch die Dichtung abgeschottet werden kann.

Es ist unschwer erkennbar, daß sich die beschriebene Anschlußverbindung nicht nur für Gas- und Wasserinstallationen eignet. Vielmehr läßt sie sich auch in fast beliebigen anderen Anwendungsbereichen einsetzen, beispielsweise bei Kraftfahrzeugen in Kühlwasserleitungen und Klimaanlagen.

Neben der erfindungsgemäßen Anschlußverbindung, die das Zusammenwirken eines Anschlußelementes mit einem montierten Schlauch unter Schutz stellt, wird durch die vorliegende Erfindung auch ein separates Anschlußelement für beliebige ringgewellte Schläuche vorgeschlagen mit einem Halteelement zur Festlegung des Schlauches, da dieses Anschlußelement bereits alleine die Erzielung der erfindungsgemäßen Vorteile gewährleistet. Hierzu ist das Halteelement dieses Anschlußelementes als Steckverbindungselement ausgebildet, weist radial vorstehende, zur formschlüssigen Beaufschlagung des Anschlußelementes, insbesondere aber des Schlauches im Bereich seiner Profilierung dienende Rastvorsprünge auf und ist insbesondere über die Rastvorsprünge zur steckbaren Montage von Schlauch und Anschlußelement in Radialrichtung elastisch nachgiebig ausgebildet. Hierdurch kann beim Ineinanderstecken von Schlauch und Anschlußelement das bereits in das Anschlußelement eingesteckte Halteelement den Wellungen des Schlauches radial ausweichen, liegt in der ausgewichenen Position elastisch unter Vorspannung an dem Schlauch an und taucht dann bei jeder einzelnen Wellung und insbesondere bei Erreichen der Endposition wieder elastisch in die zugehörige Wellung ein und legt hierdurch den Schlauch formschlüssig fest.

Um insgesamt eine sichere Anschlußverbindung zu ermöglichen, ist es zweckmäßig, wenn das Halteelement auch am Anschlußelement formschlüssig - beispielsweise in einer entsprechenden Aussparung - festgelegt ist, um hierdurch ein stabiles Widerlager für das Halteelement und somit auch für den Schlauch herzustellen.

Während natürlich auch hier möglich wäre, das Halteelement und das Anschlußelement in den Schlauch einzustecken, wird die häufigste und zweckmäßigste Anwendungsform jedoch darin liegen, daß das Anschlußelement und das auf dessen Innenseite festgelegte Halteelement den eingesteckten Schlauch außen umgreifen, so daß die Rastvorsprünge des Halteelementes radial nach innen vorstehen und zur Beaufschlagung der Schlauchaußenseite dienen. Hierbei greifen die Rastvorsprünge in Wellentäler des Schlauches ein und weichen beim Montieren den Wellenbergen elastisch aus.

Damit bei einer Bewegung des Schlauches entgegengesetzt zur Einsteckrichtung die Rastvorsprünge bzw. das Halteelement nicht ebenfalls radial ausweichen und somit der Schlauch dauerhaft festgelegt wird, empfiehlt es sich, wenn das Halteelement den Schlauch widerhakenähnlich festlegt, das heißt ein Ineinanderstecken durch die Geometrie des Halteelements bzw. der Rastvorsprünge nicht behindert, jedoch ein Auseinanderziehen von Anschlußelement und Schlauch unterbindet. Zweckmäßigerweise besitzen die den Schlauch bei Bewegungen entgegengesetzt zur Einsteckrichtung beaufschlagenden Bereich des Halteelements bzw. der Rastvorsprünge eine verhältnismäßig steile Neigung, verlaufen also fast radial. Hierdurch wird die Selbsthemmung der Anschlußverbindung sichergestellt und eine einfache Demontierbarkeit verhindert.

Auf der anderen Seite sollten das Halteelement bzw. die Rastvorsprünge auf der den Schlauch beim Ineinanderschieben beaufschlagenden Vorderseite mit einer relativ flachen Neigung versehen sein, die das radiale Ausweichen beim Ineinanderschieben begünstigt.

Gleichzeitig ist es von Vorteil, wenn sich das Halteelement an der Innenseite des Anschlußelementes auch in Axialrichtung entgegen der Einsteckrichtung abstützt und hierdurch eine Demontage verhindert, da hierdurch der Formschluß auch größeren Drücken des Strömungsmediums standhalten kann und die Anschlußverbindung dauerhaft aufrechterhalten wird. Zweckmäßigerweise ist hierbei die Stirnseite der Aussparung, die bei Bewegungen des Halteelements bzw. des Schlauches entgegen der Einsteckrichtung vom Halteelement beaufschlagt wird, derart konisch geneigt, daß sie das Halteelement bzw. die Rastvorsprünge bei solchen Bewegungen entgegen der Einsteckrichtung in Richtung des Schlauches drückt. Dies führt zu einer Selbstverstärkung der Festlegung des Schlauches durch das Halteelement, da der Eingriff der Rastvorsprünge in das Wellental des Schlauches bei Versuchen, die Anschlußverbindung aufzuheben, sogar verbessert wird. Hierdurch unterscheidet sich der Erfindungsgegenstand wesentlich vom einschlägigen Stand der Technik, dem jeweils eine solche Selbstverstärkung und in der Regel sogar das separate Halteelement - fehlt.

Bezüglich der sonstigen Ausgestaltung des Halteelementes sind die verschiedensten Varianten denkbar; am einfachsten ist es jedoch, wenn das ringförmige Halteelement ungeteilt ausgeführt ist und bereits vor der Beaufschlagung durch den Schlauch möglichst unverlierbar im Anschlußelement festgelegt ist. Ein geeignetes Beispiel besteht aus einem Halteelement, das eine etwaige ringförmige insbesondere starrere Basis aufweist mit sich hieran anschließenden federzungenähnlichen elastischen Rastvorsprüngen, wodurch die Basis für die Unverlierbarkeit im Anschlußelement und die Rastvorsprünge für das Beaufschlagen des Schlauches sorgen. Ebenso ist es aber auch möglich, daß das Halteelement in sich elastisch ausgebildet ist und hierdurch beispielsweise auch an sich starre Rastvorsprünge bei Vergrößerung des Umfangs des Halteelementes die gewünschte radiale Nachgiebigkeit erhalten.

Ein wesentlicher Vorteil der vorliegenden Erfindung kommt dadurch zum Tragen, daß das Dichtelement bzw. der Dichtring axial benachbart zum Halteelement auf der Seite des freien Endes des Schlauches angeordnet ist, so daß das Halteelement den Dichtring von etwaigen Beanspruchungen des Schlauches entkoppelt, also beispielsweise Verformungen des Schlauches durch einen hohen Mediendruck durch das Halteelement abgefangen werden und die letzten endständigen Wellungen, in deren Bereich der Dichtring angeordnet ist, hiervon unbeeinträchtigt bleiben. Da der Dichtring somit immer denselben Bereich des Schlauches beaufschlagt und der Dichtbereich keiner Relativbewegung unterworfen ist, führt dies zu einer wesentlichen Verbesserung der Dichteigenschaften im Vergleich zu anders ausgeführten Anordnungen.

Die Dichtfunktion des Dichtrings läßt sich noch verbessern, wenn der Dichtring die Außenseite des Schlauches im Bereich eines insbesondere zylindrisch ausgebildeten Wellenberges beaufschlagt, wozu er zweckmäßigerweise formschlüssig in einer entsprechenden Aussparung des Anschlußelementes gehalten wird in einem solchen Abstand von den in ein Wellental eingreifenden Rastvorsprüngen, daß die Beaufschlagung eines Wellenberges sichergestellt ist. Es ist natürlich auch möglich, dem Dichtring eine größere Axialerstreckung zu geben und ihn insbesondere auch mit einer zylindrischen Innenfläche zu versehen, um hierdurch die Beaufschlagung zumindest eines beliebig geformten Wellenberges und unter Umständen sogar zweier oder mehrerer Wellenberge zu ermöglichen. Das Anliegen des insbesondere zylindrischen Dichtrings am Wellenberg ermöglicht eine insgesamt vergrößerte Dichtfläche und somit auch eine bessere Dichtwirkung. Die Positionierung des Dichtelementes im Anschlußelement mit zweckmäßigerweise größerer Axialerstreckung führt auch dazu, daß das Anschlußelement zusammen mit dem Halteelement und dem Dichtring für Schläuche fast beliebiger Schlauch- bzw. Wellengeometrie verwendet werden kann, solange der Schlauchaußendurchmesser gleich bleibt.

Bezüglich des Halteelementes und dessen Anordnung im Anschlußelement ist noch wesentlich, daß die radial nachgiebigen Bereiche ein ausreichendes Radialspiel im Anschlußelement aufweisen, um diese radialen Auslenkungen nicht zu behindern und ein problemloses Einstecken des Schlauches zu ermöglichen.

Anstelle der Beaufschlagung durch die Rastvorsprünge des Halteelementes ist es natürlich ebenso möglich, daß die elastisch nachgiebigen Bereiche des Halteelementes das Anschlußelement beaufschlagen, wobei dies am einfachsten derart erfolgt, daß das Halteelement auf seiner Außenseite von widerhakenähnlichen Vorsprüngen des Anschlußelementes beaufschlagt wird, die sich in der montierten Endposition in die Oberfläche des Halteelementes eingraben und hierdurch die formschlüssige Festlegung des Halteelementes am Anschlußelement sicherstellen. Derartige Widerhaken können natürlich auch an der Außenseite des Halteelementes vorgesehen sein, die mit der Innenseite des Anschlußelementes entsprechend zusammenwirken. Bei einem solchen Anwendungsfall ist es zweckmäßig, wenn das Halteelement vor der Montage auf den Schlauch aufgesteckt wird, wozu beispielsweise das Halteelement geteilt ausgebildet und insbesondere mit einem Scharnier wie etwa einem Filmscharnier versehen ist und auf seiner Innenseite in die Wellungen eingreifende Nasen aufweist, die bei auf den Schlauch aufgestecktem Halteelement die Wirkverbindung zwischen beiden Bauteilen herstellen. Diese Nasen müssen bei geteilter Ausgestaltung des Halteelementes nicht in sich nachgiebig ausgebildet sein, sollten jedoch von ihrer Form her derart an die Wellenform angepaßt sein, daß sie nach der Montage sicher den Formschluß mit dem Schlauch selbst bei größeren entgegen der Einsteckrichtung gerichteten Kräften aufrechterhalten.

Weitere Merkmale und Vorteile der vorliegenden Erfindung ergeben sich aus der nachfolgenden Beschreibung von Ausführungsbeispielen anhand der Zeichnungen; hierbei zeigen
- Figur 1: eine erfindungsgemäße Anschlußverbindung zur Festlegung eines Schlauches an einem erfindungsgemäßen Anschlußelement;
- Figur 2: eine alternative Ausführungsform einer Anschlußverbindung mit in den Figuren 2a, 2b und 2c dargestellten unterschiedlichen Halteelementen zur Fixierung des Schlauches am Anschlußelement;
- Figur 3: eine weitere Ausführungsform einer Anschlußverbindung mit in den Figuren 3a und 3b dargestellten unterschiedlichen Halteelementvarianten;
- Figur 4: eine weitere Ausführungsform einer erfindungsgemäßen Anschlußverbindung mit alternativem Halteelement;
- Figuren 5 und 6: weitere Varianten einer Anschlußverbindung.

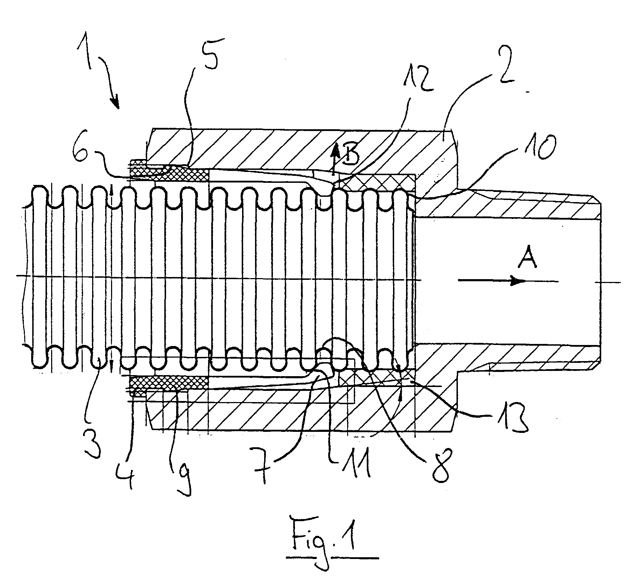

In Figur 1 ist eine Anschlußverbindung 1 im Axialschnitt dargestellt, die aus einem flanschähnlichen ringförmigen Anschlußelement 2 besteht, welches ein ringgewellter Schlauch 3 übergreift. Im Bereich der gegenseitigen Überlappung von Anschlußelement und Schlauch ist ein Halteelement 4 angeordnet, welches formschlüssig über radial in Aussparungen 5 des Anschlußelementes 2 ragende Stege 6 am Anschlußelement festgelegt ist und neben einer ringförmigen - in Figur 1 durch Kreuzschraffur dargestellten - Basis 9 Rastvorsprünge 7 aufweist, welche nach einer im wesentlichen axial verlaufenden Erstreckung radial nach innen vorstehen und in ein endständiges Wellental 8 des Schlauches zu deren formschlüssiger Festlegung eingreifen.

Die Rastvorsprünge 7 sind gegenüber der Basis 9 des Halteelementes 4 elastisch nachgiebig gelagert, indem mehrere Rastvorsprünge über den Umfang der ringförmigen Basis verteilt angeordnet sind und aufgrund ihrer größeren Erstreckung in Axialrichtung und ihrer Schlankheit in Radialrichtung biegbar ausgeführt sind.

Figur 1 zeigt den Schlauch 3 zwar in bereits montierter Position; es ist jedoch erkennbar, daß die Wellenberge 10 beim Einstecken des Schlauches in das Anschlußelement bzw. das Halteelement die geneigt zur Einsteckrichtung verlaufende Anschlagfläche 11 der Rastvorsprünge 7 beaufschlagen und diese zu einer radialen Ausweichbewegung nach außen - angedeutet durch Pfeil B - veranlassen. Beim weiteren Montagevorgang sorgt die elastische Nachgiebigkeit der Rastvorsprünge dafür, daß die Rastvorsprünge jeweils unter Vorspannung an den Wellenbergen anliegen bzw. selbsttätig in die Wellentäler wieder eintauchen, insgesamt aber die Steckmontage nicht wesentlich behindern.

Sobald der Schlauch ausreichend weit in das Anschlußelement eingesteckt ist, wird eine Endbefestigungsposition gewählt, indem der Schlauch kurz entgegen der Einsteckrichtung herausgezogen wird, um sicherzustellen, daß die Rastvorsprünge formschlüssig in das Wellental 8 eingetaucht sind, wodurch der Schlauch dauerhaft am Anschlußelement festgelegt wird.

Damit eine weitere Bewegung des Schlauches entgegen der Einsteckrichtung zuverlässig verhindert werden kann, ist die der Anschlagfläche 11 gegenüberliegende vordere Anschlagfläche 12 der Rastvorsprünge 7 in einem steilen Winkel gegenüber der - in Figur 1 durch den Pfeil A angedeuteten - Einsteckrichtung angeordnet. Hierdurch läßt sich sicherstellen, daß Bewegungen des Schlauches entgegen der Einsteckrichtung nicht zu einem selbsttätigen Anheben der Rastvorsprünge und somit zu einem Aufheben des Formschlusses führen.

Aus Figur 1 ist schließlich noch ein Dichtelement 13 erkennbar, welches innerhalb des Anschlußelementes 2 angeordnet ist und den eingesteckten Schlauch im endständigen Bereich beaufschlagt und hierdurch das Halteelement 4 vom durch den Schlauch und das Anschlußelement strömenden Medium abschottet. Auf der anderen Seite sorgt aber auch das Halteelement 4 dafür, daß im Bereich zwischen dem Formschluß mit dem Schlauch und dem Schlauchende keine Bewegungen bzw. Kräfte mehr auftreten, die die Dichtungsqualität beeinträchtigen könnten. Vielmehr werden die durch beispielsweise größere Mediendrücke verursachten Verformungen der Schläuche durch die Rastvorsprünge abgefangen und von dem Dichtring ferngehalten.

Als Ergebnis erhält man eine Anschlußverbindung mit vorteilhafter Funktioneinteilung: Während das Halteelement ausschließlich für die axiale Fixierung der Schläuche zuständig ist, sorgt der Dichtring für die Abdichtung, ohne Verformungen der Schläuche ausgesetzt zu sein.

Wie bereits eingangs erwähnt wurde, soll noch einmal darauf hingewiesen werden, daß dasselbe Prinzip der Anschlußverbindung natürlich auch in umgekehrter Art und Weise verwendet werden kann, nämlich wenn das Anschlußelement und das Halteelement in den Schlauch eintauchen und somit das Halteelement die Schlauchinnenseite beaufschlagt und gegen die Außenseite des Anschlußelementes festlegt. Ebenso ist es auch möglich, daß das Halteelement von vornherein am Schlauch festgelegt ist und die Rastvorsprünge das Anschlußelement beaufschlagen und in entsprechende Ausnehmungen des Anschlußelementes nach der Steckmontage eintauchen und so den Formschluß zwischen Schlauch und Anschlußelement herstellen. Denn die montierte Position aus Figur 1 läßt sich auf der anderen Seite auch dadurch erreichen, daß das Halteelement 4 vor dem Montieren auf den Schlauch 3 gesteckt und anschließend den Schlauch zusammen mit dem Halteelement in das Anschlußelement 2 gesteckt wird. In diesem Fall sorgen die widerhakenähnlich ausgebildeten Stege 6 nach dem Eintauchen in die Aussparung 5 für die formschlüssige Verbindung mit dem Anschlußelement.

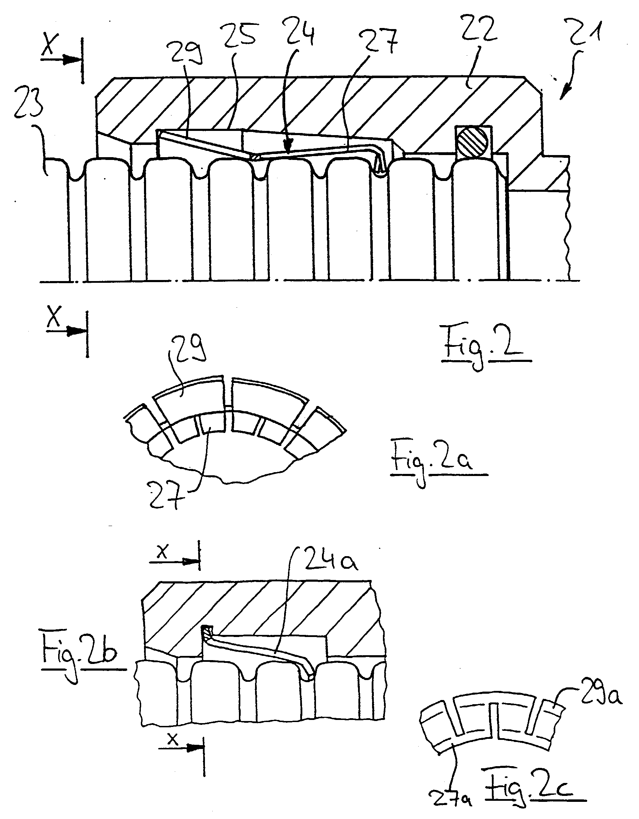

In Figur 2 ist eine Anschlußverbindung 21 dargestellt, die aus einem Anschlußelement 22, einem Schlauch 23 und einem Halteelement 24 besteht. Figur 2a zeigt die Ansicht des Halteelementes 24 aus Richtung X der Figur 2 und soll andeuten, daß der Haltering insgesamt 12 über den Umfang angeordnete Teilungen aufweist, wodurch er elastisch genug ist, so daß seine Rastvorsprünge 27 in Radialrichtung in ausreichendem Maße ausweichen können. Bei diesem Halteelement 24 ist es aber auch möglich, an beliebiger Umfangsstelle eine Unterbrechung vorzusehen, um das Halteelement vor der Montage der Anschlußverbindung nicht in das Anschlußelement, sondern auf den Schlauch aufzustecken und anschließend den Schlauch zusammen mit dem Halteelement in das Anschlußelement einzustecken. Hierbei weichen nicht die Rastvorsprünge 27, sondern die nach außen vorstehenden Spreizkrallen 29 in Radialrichtung aus und zwar nach innen, da sie beim Einstecken von der Wandung der konisch ausgebildeten Einstecköffnung des Anschlußelementes beaufschlagt werden. Nach dem Einstecken springen die Spreizkrallen in eine auf der Innenseite des Anschlußelements vorgesehene Aussparung 25 mit größerem Durchmesser und sorgen so für eine formschlüssige Fixierung des Halteelementes am Anschlußelement.

Das in Figur 2b dargestellte Halteelement 24a besteht aus einem Mäanderring, dessen Form Figur 2c, die Vorderansicht aus Richtung X der Figur 2b zeigt.

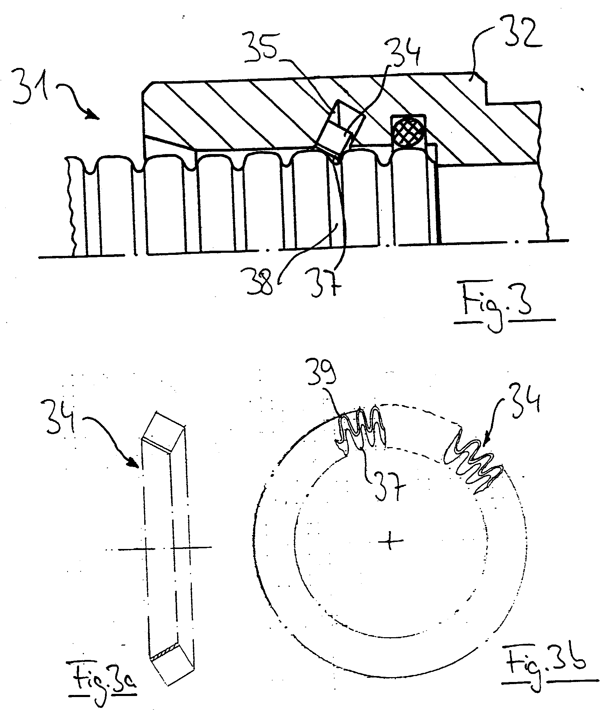

In Figur 3 ist eine Anschlußverbindung 31 mit Anschlußelement 32, Schlauch 33 und Halteelement 34 dargestellt, wobei das Halteelement 34 als Kegelwellring ausgebildet ist, wie insbesondere aus den Figuren 3a und 3b ersichtlich ist. Das Halteelement 34 ist in sich elastisch und kann aufgrund des ihm durch eine Innennut 35 des Anschlußelementes 32 zur Verfügung stehenden ausreichenden Radialspiels insgesamt radial ausweichen, um das Einstecken des Schlauches 33 zu ermöglichen, bevor die Rastvorsprünge 37 in das entsprechende Wellental 38 eingreifen. Das Halteelement 34 ist mit parallel zueinander und geneigt zur Radialrichtung verlaufender Vorder- und Rückseite ausgebildet, wobei diese Neigung in Einsteckrichtung verläuft und hierdurch so ausgebildet ist, daß sie das radiale Aufweiten beim Einstecken des Schlauches begünstigt, jedoch bei Bewegungen entgegen der Einsteckrichtung im Sinne einer Selbsthemmung behindert.

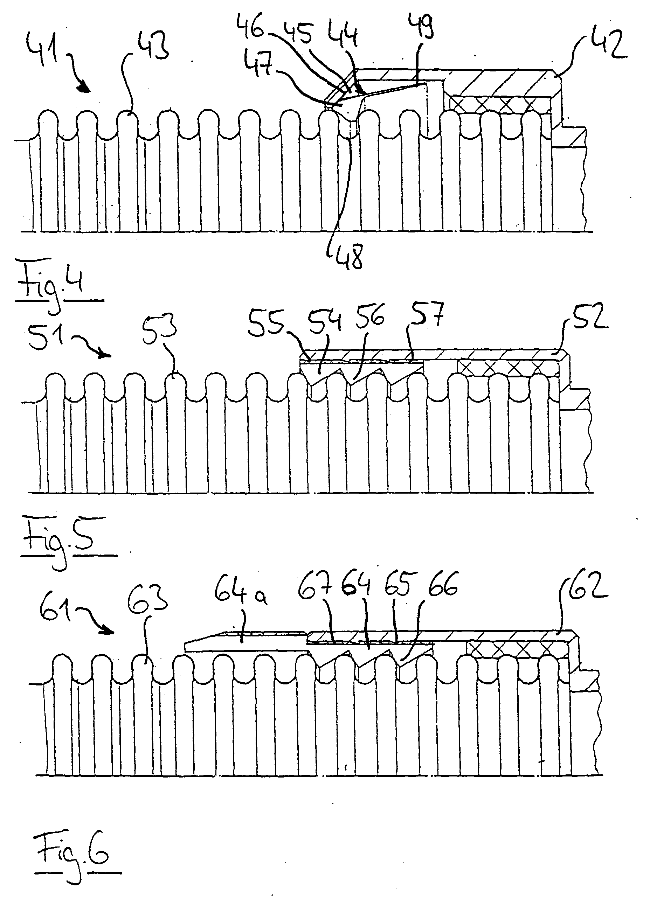

In Figur 4 ist eine bevorzugte Abwandlung der Ausführungsform aus Figur 1 in Form einer Anschlußverbindung 41 dargestellt, bei der ein Halteelement 44 ebenfalls aus einer ringförmigen Basis 49 und hiervon ausgehenden Rastvorsprüngen 47 gebildet ist, wobei aber die Basis auf der dem Schlauchende zugewandten Seite positioniert ist. Das Halteelement 44 ist in einer Aussparung 45 des Anschlußelementes 42 formschlüssig gehalten, wobei die schräg verlaufende Anlagefläche 46 der Aussparung des Anschlußelementes, an welcher das Halteelement bei Bewegungen entgegen der Einsteckrichtung anstößt, eine Selbstverstärkung der Festlegung von Schlauch und Anschlußelement bewirkt, da diese Anlagefläche in Richtung des Schlauches konisch geneigt verläuft und hierdurch die Rastvorsprünge 47 in das Wellental 48 hineindrückt und den Formschluß mit dem Schlauch noch verstärkt.

In den Figuren 5 und 6 sind alternative Ausführungsformen von Anschlußverbindungen dargestellt, die zwar weniger bevorzugte Varianten darstellen, aber die vielseitigen Anwendungsmöglichkeiten der vorliegenden Erfindung verdeutlichen sollen: Figur 5 zeigt eine Anschlußverbindung 51 mit einem Anschlußelement 52 und einem Schlauch 53 sowie einem Halteelement 54, welches als geteiltes und mit einem eingeformten Filmscharnier versehenes Formelement ausgebildet und mit sich radial nach innen erstreckenden Nasen 56 versehen ist, die in die Schlauchwellungen formschlüssig eingreifen. Die elastischen Rastvorsprünge 57 befinden sich hier auf der das Anschlußelement 52 beaufschlagenden Außenseite des Halteelementes 54 und sind durch in sich elastisch nachgiebige Oberflächenbereiche gebildet, die sich der Innenkontur des Anschlußelementes 52 elastisch anpassen. Diese Innenkontur weist umlaufende widerhakenähnliche Rippen 55 auf, die zum einen das Aufstecken des Anschlußelementes auf das Halteelement aufgrund der flachen Neigung ermöglichen, andererseits aber eine Demontage aufgrund ihrer Widerhakenform verhindern.

Bei dieser Ausführungsvariante ist das geteilte Halteelement vor der Montage an geeigneter Stelle um den Schlauch herumzulegen und anschließend der Schlauch zusammen mit dem Halteelement in das Anschlußelement einzustecken. Es ist unschwer erkennbar, daß eine solche Variante aufgrund der losen Einzelteile für den Baustelleneinsatz weniger geeignet ist als die vorstehend beschriebenen Lösungen mit unverlierbar im Anschlußelement festgelegtem einstückigen Halteelement.

Die Anschlußverbindung 61 aus Figur 6 entspricht derjenigen aus Figur 5 mit dem einzigen Unterschied, daß an das Halteelement 64 noch ein integrierter axial verlaufender Knickschutz 64a angefügt ist.

Zusammenfassend bietet die vorliegende Erfindung den Vorteil, daß eine auch großen Drücken von beispielsweise 50 bar standhaltende Anschlußverbindung zur Verfügung gestellt wird, die sich durch wenige, jeweils unverlierbar gehaltene Einzelteile und insbesondere durch eine stark vereinfachte Montierbarkeit auszeichnet, indem lediglich der Schlauch und das Anschlußelement ohne Werkzeug ineinandergesteckt werden müssen. Eine solche Anschlußverbindung ist insbesondere gut geeignet für den Einsatz auf Baustellen, da zum Montieren dieser Anschlußverbindung weder besonderes Werkzeug noch besondere Fachkenntnisse erforderlich sind.

## Patentansprüche

1. Anschlußverbindung zur fluid- und gasdichten, druckfesten und löt- bzw. schweißlosen Anbindung ringgewellter Metallschläuche an ein in einem endständigen Bereich des Schlauches angeordnetes Anschlußelement,
wobei der Schlauch und/oder das Anschlußelement ein Dichtelement trägt,
dadurch gekennzeichnet,
daß die Anschlußverbindung (1, 21, 31, 41, 51, 61) steckbar ausgeführt ist,
daß zwischen Schlauch (3, 23, 33, 43, 53, 63) und Anschlußelement (2, 22, 32, 42, 52, 62) ein insbesondere ringförmiges Halteelement (4, 24, 34, 44, 54, 64) angeordnet ist, daß das Halteelement mit radial vorstehenden elastisch nachgiebigen Rastvorsprüngen (7, 27, 37, 47, 57, 67) versehen ist, deren Radialerstreckung veränderbar ist zwischen einer das Ineinanderstecken von Schlauch und Anschlußelement ermöglichenden elastisch eingezogenen Montageposition und einer nach der Steckmontage einen Formschluß mit dem gewellten Schlauch und/oder dem Anschlußelement selbsttätig herstellenden vorstehenden Rastposition.

2. Anschlußverbindung nach Anspruch 1,
dadurch gekennzeichnet,
daß das Halteelement (4, 24, 34, 44) formschlüssig in einer entsprechenden Aussparung des Anschlußelementes (5, 35, 45) festgelegt ist, und daß die Rastvorsprünge (7, 27, 37, 47) den Schlauch (3, 23, 33, 34) beaufschlagen.

3. Anschlußverbindung nach zumindest Anspruch 2,
dadurch gekennzeichnet,
daß das Halteelement (4, 24, 34, 44) auf der Innenseite des Anschlußelementes (2, 22, 32, 42) angeordnet ist, daß die Rastvorsprünge (7, 27, 37, 47) die Außenseite des in das Anschlußelement eingesteckten Schlauches (3, 23, 33, 43) beaufschlagen und in der Rastposition in zumindest ein Wellental (8, 28, 38, 48) eingreifen.

4. Anschlußelement zur Herstellung einer Anschlußverbindung für ringgewellte Schläuche mit einem Halteelement zur Festlegung des Schlauches, insbesondere gemäß Anspruch 1,
dadurch gekennzeichnet,
daß das Halteelement (4, 24, 34, 44) als Steckverbindungselement ausgebildet ist, daß das Halteelement radial vorstehende, zur formschlüssigen Beaufschlagung des Anschlußelementes (52, 62) und/oder des Schlauches (3, 23, 33, 43) im Bereich ihrer Profilierung dienende Rastvorsprünge (7, 27, 37, 47, 57, 67) aufweist, und daß das Halteelement und/oder die Rastvorsprünge zur steckbaren Montage von Schlauch und Anschlußelement (2, 22, 32, 42, 52, 62) in Radialrichtung elastisch nachgiebig ausgebildet sind.

5. Anschlußelement nach Anspruch 4,
dadurch gekennzeichnet,
daß das Halteelement (4, 24, 34, 44) zur Beaufschlagung des Schlauches (3, 23, 33, 43) mittels seiner Rastvorsprünge (7, 27, 37, 47) dient und formschlüssig am Anschlußelement (2, 22, 32, 42) festlegbar ist.

6. Anschlußelement nach zumindest einem der vorstehenden Ansprüche 4 oder 5,
dadurch gekennzeichnet,
daß das Anschlußelement (2, 22, 32, 42) und das auf dessen Innenseite festgelegte Halteelement (4, 24, 34, 44) den eingesteckten Schlauch (3, 23, 33, 43) außen umgreifen, so daß die Rastvorsprünge (7, 27, 37, 47) des Halteelementes radial nach innen vorstehen und zur Beaufschlagung der Schlauchaußenseite dienen.

7. Anschlußelement nach zumindest einem der vorstehenden Ansprüche 4 bis 6,
dadurch gekennzeichnet,
daß sich das Halteelement (4, 24, 34, 44) an der Innenseite des Anschlußelementes (2, 22, 32, 42) auch in Axialrichtung entgegen der Einsteckrichtung insbesondere im Bereich einer Aussparung (5, 25, 35, 45) abstützt.

8. Anschlußelement nach Anspruch 7,
dadurch gekennzeichnet,
daß die Aussparung (45) eine vom Halteelement (44) bei Bewegungen entgegen der Einsteckrichtung (A) beaufschlagte Stirnseite (46) aufweist, und
daß die Stirnseite derart konisch geneigt verläuft, daß sie das Halteelement bzw. die Rastvorsprünge (47) bei Bewegungen entgegen der Einsteckrichtung im Sinne einer Selbstverstärkung in Richtung des Schlauches (43) drückt.

9. Anschlußelement nach zumindest einem der vorstehenden Ansprüche 4 bis 8,
dadurch gekennzeichnet,
daß das ringförmige Halteelement (4, 24, 34, 44) ungeteilt umläuft.

10. Anschlußelement nach zumindest einem der vorstehenden Ansprüche 4 bis 9,
dadurch gekennzeichnet,
daß das Halteelement (4, 44) aus einer etwa ringförmigen Basis (9, 49) und aus sich hieran anschließenden federzungenähnlichen elastischen Rastvorsprüngen (7, 47) und gegebenenfalls aus zur Abstützung am Anschlußelement dienenden Spreizkrallen (29) besteht.

11. Anschlußelement nach zumindest einem der vorstehenden Ansprüche 4 bis 9,
dadurch gekennzeichnet,
daß das Halteelement (24, 24a, 34) in sich elastisch ist und hierdurch an sich starre Rastvorsprünge (27, 27a, 37) durch radiale Aufweitung des Halteelementes elastisch nachgiebig ausgebildet sind.

12. Anschlußelement nach zumindest einem der vorstehenden Ansprüche 4 bis 11,
dadurch gekennzeichnet,
daß axial benachbart zum Halteelement (4, 24, 34, 44) auf der dem freien Ende der Schlauchleitung (3, 23, 33, 43) zugeordneten Seite ein Dichtelement (13) angeordnet ist.

13. Anschlußelement nach zumindest Anspruch 12,
dadurch gekennzeichnet,
daß das Dichtelement (13) zur Beaufschlagung der Außenseite des Schlauches (3) im Bereich eines insbesondere zylindrisch ausgebildeten Wellenberges dient.

14. Anschlußelement nach Anspruch 12 oder 13,
dadurch gekennzeichnet,
daß das Dichtelement (13) eine die Außenseite des Schlauches (3) beaufschlagende zylindrische Innenfläche aufweist.

15. Anschlußelement nach zumindest einem der Ansprüche 12 oder 13,
dadurch gekennzeichnet,
daß das Dichtelement in einer auf der Innenseite des Anschlußelementes vorgesehenen Aussparung formschlüssig gehalten ist.

16. Anschlußelement nach zumindest einem der vorstehenden Ansprüche 4 bis 14,
dadurch gekennzeichnet,
daß das Halteelement (4, 24, 34, 44) und/oder die Rastvorsprünge (7, 27, 37, 47) gegenüber dem Anschlußelement (2, 22, 32, 42) ein an die Durchmesseränderung beim radialen Ausweichen angepaßtes Radialspiel aufweisen.
